(19) **Europäisches Patentamt**

**European Patent Office**

**Office européen des brevets**

(11) Veröffentlichungsnummer: **0 320 436**
A2

# (12) EUROPÄISCHE PATENTANMELDUNG

(21) Anmeldenummer: **88730272.7**

(22) Anmeldetag: **05.12.88**

(51) Int. Cl.4: **B 25 J 9/18**

(30) Priorität: **05.12.87 DE 3741632**

(43) Veröffentlichungstag der Anmeldung:
**14.06.89 Patentblatt 89/24**

(84) Benannte Vertragsstaaten:
**AT BE CH DE ES FR GB IT LI LU NL SE**

(71) Anmelder: **Noell GmbH**
**Alfred-Nobel-Strasse 20 Postfach 6260**
**D-8700 Würzburg 1 (DE)**

(72) Erfinder: **Krieger, Friedrich**
**Petrinistrasse 38**
**D-8700 Würzburg 1 (DE)**

(74) Vertreter: **Kaiser, Henning**
**SALZGITTER AG Patente und Lizenzen Kurfürstendamm**
**32 Postfach 15 06 27**
**D-1000 Berlin 15 (DE)**

(54) Verfahren und Vorrichtung zum Erkennen und Ansteuern eines Raumzieles.

(57) Es wird ein Verfahren und eine Vorrichtung zum Erkennen und Ansteuern eines Raumzieles in einem nicht direkt einsehbaren Raum vorgeschlagen, wobei eine um 360° drehbare und - mit einer zweiten Achse - um 180° schwenkbare Kamera an der Spitze eines Auslegers eines Teleoperators die Umgebung und den Zielpunkt, d.h. den künftigen Arbeitspunkt des Teleoperators beobachtet und die Bilder an einen Fernsteuerplatz sendet, von dem aus alle Robot-Achsen-Bewegungen automatisch und/oder manuell gesteuert und registriert werden.

Der Teleoperator wird entlang der optischen Achse vom Startpunkt bis zum Zielpunkt nach vorheriger Zielsuche geradlinig durch kombinierte Achssteuerung des Teleoperators angefahren.

Dieses Verfahren ermöglicht dem Bediener des Teleoperators die jederzeitige richtige Orientierung innerhalb eines Raumes entsprechend der Reichweite des eingesetzten Industrieroboters und dessen zur Blickrichtung zeit- und richtungsgetreue Steuerung.

Fig. 5

EP 0 320 436 A2

## Beschreibung

### Verfahren und Vorrichtung zum Erkennen und Ansteuern eines Raumzieles

Die Erfindung betrifft ein Verfahren zum Erkennen und Ansteuern eines Zieles in einem direkt nicht einsehbaren Raum, wobei eine drehbare Kamera an der Spitze eines Auslegers eines Teleoperators die Umgebung des Auslegers beobachtet und die Bilder auf einen Monitor an einen Fernsteuerplatz sendet.

Teleoperatoren sind manuell ferngesteuerte Bewegungseinrichtungen für Handhabungsaufgaben. Sie werden häufig eingesetzt, wenn die Handhabungsaufgabe in für Menschen unsichtbaren oder nicht begehbaren Räumen, beispielsweise im Druckgefäß eines aktivierten Kernreaktors, erledigt werden muß. Im Zusammenhang mit der vorliegenden Erfindung soll unter Teleoperator auch ein zeitweise manuell gesteuerter Industrieroboter (VDI-Richtlinie 2860, Blatt 1, Entwurf 1982, Abs. 5.1.1.) verstanden werden.

Es ist bekannt, Teleoperatoren mit Hilfe von Bildern von an Auslegerarmen montierten Kameras zu steuern ("Industrial Robots", Pergamon Press, Oxford, UK, Seite 90, entsprechend JP 52.91265). Die Art der Kamerabewegung und die Methode der Steuerung der Achsen des Teleoperators ist nicht offenbart.

Aus der Zeitschrift "Sensor Review", Januar 1983, Seite 23 - 26, ist ebenfalls ein Roboter anthropomorphischen Types mit einer auf dem Werkzeugträger parallel zu einem Greifer angeordneten Kamera bekannt. Es sollen jedoch keine Bilder für eine manuelle Fernsteuerung geliefert werden, sondern eine parallaxen-freie Mustererkennung möglich sein.

In der GB-PS 2 087 107 ist ein Teleoperator zylindrischen Types beschrieben, der eine Kamera am Werkzeugträger aufweist, mit der nach der Teach-in-method die Aufgabe, eine räumliche Schweißnaht zu erzeugen, eingelesen und per Kamera kontrolliert wird. Die direkte Ansteuerung eines Raumzieles ist nicht Gegenstand des Patentes.

Aus der US-PS 4 258 425 ist ein Roboter kartesianischen Types bekannt, der manuell, spurgeführt oder im Playback-Verfahren ferngesteuert werden kann. Die Koordinaten werden auf einem Bildschirm angezeigt. Kameraführung oder Punkt-Ziel-Steuerung ist nicht vorgesehen.

Bei einem funkferngesteuerten, geländegängigen Manipulatorfahrzeug (Zeitschift "Kerntechnik", 1975, Heft 12, Seite 527 - 532) sind Mono- und Stereo-Fernsehkameras zur optischen Steuerkontrolle auf dem Fahrzeug in einem Schwenk- und Neigekopf angeordnet. Die Kameraposition ist für ein genaues, zielorientiertes Führen des Werkzeugträgers oder Greifers nicht optimal, da der Manipulatorarm oder das Fahrwerk die Arbeitspositionen des Greifers verdecken können. Eine kombinierte Mehrachsensteuerung des Greifers ist ebenfalls nicht offenbart.

Es ist daher die Aufgabe der Erfindung, ein Verfahren und eine Vorrichtung zum Erkennen und geradlinigen Ansteuern eines Punktzieles mit Hilfe einer Kamera in einem beliebigen, nicht direkt einsehbaren Raum innerhalb der maximalen Reichweite eines Teleoperators oder eines Industrieroboters zu schaffen, die es unabhängig vom jeweiligen Roboter-Typ ermöglichen manuell und/oder automatisch, ein Ziel mit dem Werkzeug anzusteuern. Dabei soll der Steuerschalter in logisch gleicher Richtung vorwärts, rückwärts, herauf, herunter oder links und rechts zu führen sein wie die optische Achse der Kamera bei Zielanfahrt.

Die Aufgabe wird gelöst durch die in den Ansprüchen 1 und 12 genannten Merkmale. Weiterbildungen der Erfindung sind in den Unteransprüchen erfaßt.

Das erfindungsgemäße Verfahren ermöglicht es, ein beliebiges Raumziel direkt anzusteuern und den Steuerprozeß auf einem Monitor zu verfolgen. Das visuelle Ansteuern eines Raumzieles mittels eines Teleoperators verlangte bisher eine außerordentliche Konzentration des Bedieners, da mit einem üblichen Kamerasystem eine Raumorientierung fehlte. Dies gilt insbesondere für Industrieroboter, mit denen durch gleichzeitige Bewegung des Robotsystems in drei oder mehr Achsen Ziele in einem in sich geschlossenen Raum angesteuert werden müssen. Gemeint sind damit Industrieroboter folgender Art:

Typ A Kartesianischer Typ mit drei translatorischen Achsen,

Typ B Antropomorphischer Roboter mit ausschließlich rotatorischen Freiheitsgraden,

Typ C Mischform zwischen einem kartesianischen und einem zylindrischen Roboter, wie beispielsweise gemäß DE-OS 31 42 500,

Typ D Mischtyp eines anthropomorphen mit einem zylindrischen Roboter, z.B. entsprechend DE-OS 35 06 146.

Für alle diese Robotertypen sind ferngesteuerte Operationen an jedem Raumziel - und zu jedem Raumziel hin in gradliniger Anfahrt - möglich, obwohl teilweise mehr als drei Achsen der Teleoperatoren gesteuert werden müssen und normalerweise ein Bediener damit überfordert wäre.

Dies ist im besonderen dann möglich, wenn einige der zu steuernden Achsen mit den anderen gesteuerten Achsen synchron geschaltet sind. Unter synchron wird verstanden, daß entweder die Achsen der anderen Freiheitsgrade, die nicht gesteuert werden, stillstehen bzw. gleichsinnig oder gegenläufig mit gleicher Winkelgeschwindigkeit bewegt werden.

Mit Einschränkung ist dieses Verfahren auch für die Robottypen polarer oder zylindrischer Art geeignet, soweit das Raumziel optisch nicht durch den Robotkörper verdeckt ist; diese Einschränkung der direkten Sichtmöglichkeit ist an sich selbstverständliche Voraussetzung.

Versuche haben gezeigt, daß eine Kamera nur in zwei Achsen gedreht oder geschwenkt werden muß, um einen Raum voll abzutasten bis das Raumziel erkannt ist, z.B. in Monitormitte, um dann geradlinig entsprechend der Richtung der optischen Kameraachse angesteuert zu werden.

Da die Nullpositionen aller Robotsystemachsen bekannt sind, läßt sich die Richtung und auch die Bewegung durch Winkel- und Wegmessung genau ermitteln und definieren, so daß die jeweiligen Koordinaten zeitgetreu in einem Rechner gespeichert werden können, um zum einen von dieser Ausgangsposition den Zielpunkt zu berechnen und zum zweiten für Wiederholvorgänge den Bewegungsablauf zu speichern, um ihn eventuell automatisch ablaufen zu lassen.

Für den Fall, daß in Zielrichtung ein bekanntes oder unbekanntes Objekt den Fahrweg versperrt kann der Bediener den Teleoperator auch manuell steuern, um das Hindernis zu umfahren. Dazu werden die jeweiligen Koordinaten und Bewegungsrichtungen des Werkzeugträgers - an dem die Kamera oder ein Werkzeug angeordnet ist - am Monitor angezeigt.

Erfindungsgemäß soll auch bei wiederholter Ansteuerung eines Raumzieles, z.B. mit verschiedenen Werkzeugen, der Bediener die Möglichkeit haben, den Weg des Werkzeuges zu verfolgen; dazu dient der bei dem ersten Ansteuern aufgenommene Kamerafilm.

Um sich ganz auf die Arbeit mit dem Werkzeug konzentrieren zu können, besteht erfindungsgemäß die Möglichkeit, den Erstlauf/das erste Anfahren des Raumzieles im Rechner zu speichern und das nächste Anfahren dieses Raumzieles mit einem Werkzeug automatisch zu gestalten, so daß der Bediener nur die Startoperation manuell ausführen muß.

Besonders wichtig für Operationen in einem nicht einsehbaren Raum ist eine ständige Orientierung - in allen drei Raumachsen - des Bedieners. Dies umso mehr wenn plötzliche Fehlfunktionen des Teleoperators zum manuellen Eingriff zwingen, oder wenn unerwartete Hindernisse während des Ansteuerns des Raumzieles im Fahrweg auftauchen und mit dem Werkzeugträger umfahren werden müssen. Dazu wird erfindungsgemäß jeder Antrieb der beweglichen Roboterachsen mit dem manuellen Bedienungsschalter derart gekoppelt, daß Schaltbewegungen in logisch richtiger Folge, d.h. sowohl zeitgleich als auch parallel, mit den Schalterbewegungen erfolgen.

Beim Arbeiten an einem Raumziel ist es manchmal nützlich, mit einer Kamera von einem anderen Standort aus, der nicht in gleicher Achse wie die Werkzeughauptachse liegt, die Operationen am Raumziel zu verfolgen, da von einer Kamera aus manchmal die räumliche Entfernung der Werkzeugspitze vom Raumziel nicht sicher erkannt werden kann. Dazu wird erfindungsgemäß diese Kamera ebenfalls vom Fernsteuerplatz aus über Monitor kontrolliert.

Es ist ebenso möglich, am Werkzeugträger eine schwenk- oder drehbare oder translatorisch bewegbare Kamera anzuordnen, die außerhalb der Werkzeugachse liegt, wenn sie erfindungsgemäß vom Monitor aus gesteuert wird und zusätzlich ein entstehender Parallaxen-Fehler zwischen der optischen Achse und der Werkzeughauptachse rechnerisch korrigiert wird. Dies ist deshalb möglich, weil alle Bewegungen des Werkzeuges erfindungsgemäß gespeichert werden und die Raumzielrichtung bekannt ist.

Diese Parallaxen-Fehlerkorrektur ist überflüssig, wenn die Kamera erfindungsgemäß separat zum Werkzeugträger so gesteuert werden kann, z.B. durch Drehen oder Schwenken, daß die optische Achse der Kamera und die Werkzeugachse sich im Raumziel schneiden.

Die Korrektur kann sich sowohl auf die optische Achse als auch auf die Werkzeughauptachse als Bezugslinie beziehen. Beispielsweise könnte für ein Greiferwerkzeug entweder die optische Achse der Kamera korrigiert oder die Lage der Greifer geändert werden, damit das zu erfassende Objekt direkt richtig angesteuert oder die Greifer nach Ansteuerung am Ziel auf das Objekt ausgerichtet werden.

Einfache Fehlerkorrekturen bei der Ansteuerung sind erfindungsgemäß möglich, wenn der automatischen Steuerung eine manuelle Schaltung überlagert oder für die manuelle Steuerung des Teleoperators die automatische Steuerung zeitweise ausgesetzt wird.

Aus mehreren Gründen kann in vorteilhafter Weise das Verfahren derart verfeinert werden, daß eine Kollision des Werkzeugs oder der Kamera - allgemein: des Werkzeugträgers - mit einem anderen Bauteil ausgeschlossen wird. Bei Annäherung an das Raumziel kann in definiertem Abstand vom Objekt die automatische Ansteuerung ausgesetzt werden. Mit der gleichen Methode könnte aber auch beispielsweise eine vordefinierte Lochtiefe für ein Bohrwerkzeug eingehalten werden.

Ein anderer Grund ist die Verhinderung einer Selbstkollision mit einem Robot-Bauteil oder einem anderen Kollisionskörper im Arbeitsraum.

Der Vorteil der erfindungsgemäßen Verfahrensschritte kann auch wie folgt definiert werden:

Dadurch, daß der Bediener zum einen eine optische Information erhält, als wenn er selbst sich jeweils an der Spitze des Werkzeugträgers befände und zum zweiten alle von ihm veranlaßten Bewegungen des Werkzeugträgers in logisch richtiger Folge, d.h. zu seinen Schalterbewegungen gleichsinnig ablaufend, ist es ihm jeder Zeit möglich, sich im Raum, in dem der Teleoperator arbeitet, zu orientieren.

Den einfachsten Fall einer erfindungsgemäßen Zielsuche und des Anfahrens eines Zieles in einem quaderförmigen Raum mit Hilfe eines kartesianischen Industrieroboters (Typ A) zeigt die Tabelle I. Es sind sechs Achsen definiert, die drei Raumachsen X, Y und Z sowie zusätzlich als vierte Achse die Vollkreisachse für die Kamera (Werkzeugträger) in XY-Ebene und als fünfte Achse die Schwenkachse für die Kamera (Werkzeugträger) in XZ-Ebene. Für die Zielsuche in dem genannten Raum braucht lediglich die Kamera um die vierte und fünfte Achse bewegt zu werden bis die optische Achse der Kamera das Ziel erfaßt hat. Um das Ziel anfahren zu können, müssen je nach Lage des Raumzieles ein bis drei Achsen, d.h. die X- und/oder Y- und/oder Z-Achse des Roboters bewegt werden. Dies soll geschehen ohne daß die Kamera das Ziel verliert. Die sechste Achse für das Werkzeug bleibt außer Funktion.

T A B E L L E   I

Roboter-Achsen

Funktion der Achsen bei Roboter Typ

| Achse | A | B | C | D |
|---|---|---|---|---|
| 1 | Translation x-Achse | Rotation Fuß | Ring drehen | Rotation Plangelenk unten |
| 2 | Translation y-Achse | Oberarm schwenken | Translation horizontaler Schlitten | Rotation Schräggelenk unten |
| 3 | Translation z-Achse | Unterarm schwenken | Translation vertikaler Schlitten | Translationsachse |
| 4 | Werkzeugträger drehen | Werkzeugträger drehen | Mast drehen | Rotation Schräggelenk oben |
| 5 | Werkzeugträger schwenken | Werkzeugträger schwenken | Werkzeugträger drehen | Rotation Plangelenk oben |
| 6 | Werkzeug drehen | Werkzeug drehen | Werkzeugträger schwenken | Werkzeugträger schwenken |
| 7 | − | − | Werkzeug drehen | Werkzeug drehen |

EP 0 320 436 A2

Wesentlich komplizierter ist die Steuerungsaufgabe bei einem Industrieroboter des Types C, die zum besseren Verständnis anhand von schematischen Skizzen näher erläutert werden soll. Es zeigen:

Fig. 1 einen Roboter des Types C,

Fig. 2 - 4 den erfindungsgemäßen Verfahrensablauf einer Zielanfahrt als Momentaufnahme zu drei verschiedenen Zeitpunkten,

Fig. 5 eine erfindungsgemäße Vorrichtung.

Ein Teleoperator des Types C ist zur Demontage eines Kernreaktorbehälters in einem Kernkraftwerk aufgestellt.

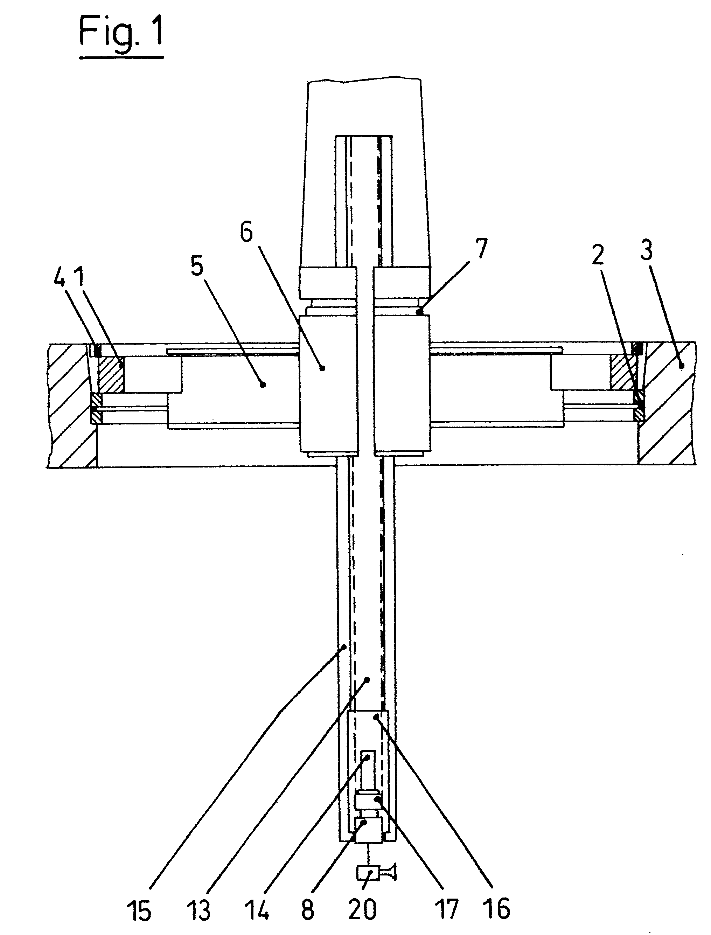

Fig. 1 zeigt das Gerät, das von einem nicht dargestellten Fernsteuerplatz aus bedient wird. Um die Übersichtlichkeit zu wahren, sind die Antriebe und die Kraftübertragungsglieder nicht dargestellt.

Ein Ring 1 mit 3460 mm Durchmesser ist über Lager 2 im Rahmen 3 in horizontaler Ebene um 360° drehbar gelagert und über Verzahnung 4 antreibbar. An einem verbreiterten kreisabschnittförmigen Teilstück des Ringes 1 ist eine Führung 5 - wie die Sehne eines Kreises - angeordnet, in der ein horizontal querverschiebbarer Schlitten 6 gelagert ist. Dieser Schlitten 6 trägt über Gleitlager 7 einen 15000 mm langen Mast 15, der um seine vertikale Achse um 360° gedreht werden kann. Am Mast 15 ist eine Vertikalführung 13 befestigt, in der ein Vertikalsupport 16 auf und nieder gleitet.

Das Drehwerk 17 ermöglicht ein Drehen des auf dem Vertikalsupport 16 angeordneten Werkzeugträgers 14 um die Vertikalachse des Teleoperators, während das Schwenkwerk 8 eine Kippbewegung des Werkzeugträgers 14 relativ zur Vertikalachse ausführen kann.

An der Spitze des Werkzeugträgers 14 ist in einer Werkzeugaufnahme eine Kamera 20 für die Übertragung von Bildern zu einem Monitor am Fernsteuerplatz angeordnet. Diese Kamera 20 kann gegen ein Werkzeug, z.B. eine Bohrmaschine, ausgetauscht werden.

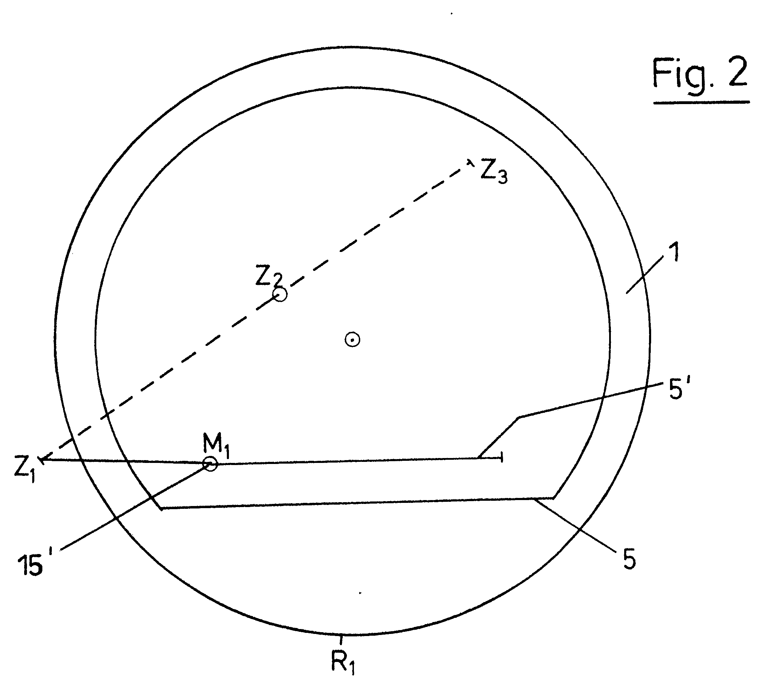

Die Fig. 2 - 4 zeigen den Verfahrensablauf, wie er qualitativ in Tabelle II und quantitativ in Tabelle III dargestellt ist.

Die siebte Achse (Werkzeug drehen) bleibt stets in Ruhestellung, da für Zielanfahrt und vorherige Zielsuche nur die Kamera 20 (Fig.1) im Einsatz ist. Ein X bedeutet, daß diese Achse gesteuert wird; ein - bedeutet, daß diese Achse synchron geschaltet ist.

# T A B E L L E  II

## Achs-Bewegungen

| Achse | Zielsuche | Zielanfahrt Z 1 - Z 2 | Zielanfahrt Z 2 - Z 3 |
|-------|-----------|------------------------|------------------------|
| 1 | – | – | x |
| 2 | – | x | – |
| 3 | – | x | x |
| 4 | – | x | x |
| 5 | x | synchron zu Achse 4 | synchron zu Achse 1;4 |
| 6 | x | – | – |
| 7 | – | – | – |

# T A B E L L E   III

## Achs-Stellungen

| Achse | Fig. 2/Z 1 | Fig. 3/Z 2 | Fig. 4/Z 3 |
|---|---|---|---|
| 1 | 0° | 0° | 133° |
| 2 | 0 mm | 825 mm | 825 mm |
| 3 | -2000 mm | -5826 mm | -9000 mm |
| 4 | 178,5 ° | 90 ° | 123 ° |
| 5 | 36,5 ° | 125 ° | 201 ° |
| 6 | 49,7 ° | 49,7 ° | 49,7 ° |
| 7 | Ruhestellung bei 0 | | |

Von einem Startpunkt Z 1 (Fig. 2) soll ein Raumziel am Zielpunkt Z 3 gesucht und angesteuert werden. Für die Zielsuche (Tabelle II) müssen nur die fünfte Achse - Werkzeugträger drehen um max. 360 °- und die sechste Achse - Werkzeugträger schwenken um max. 180° - bewegt werden, bis der Zielpunkt Z 3 vom Startpunkt Z 1 aus mit der Kamera 20 (Fig.1) erfaßt wird.

Auf dem Wege von Z 1 nach Z 2 - einem beispielhaft ausgewählten Zwischenpunkt auf der Geraden zwischen Z 1 und Z 3 - sind gemäß Tabelle II nur die zweite, dritte und vierte Achse des Teleoperators zu steuern, während die fünfte Achse synchron - gemäß vorliegender Definition hier: gegenläufig zur vierten Achse mit gleicher Winkelgeschwindigkeit wie die vierte Achse -vom Rechner gesteuert wird. Die optische Achse der Kamera 20 bleibt dabei starr auf dem Zielpunkt Z 3 ausgerichtet. Im weiteren Verlauf der Zielanfahrt von Z 2 nach Z 3 wird an Z 2 die zweite Achse stillgesetzt und die erste Achse zusammen mit der dritten und vierten Achse bewegt. Dabei wird die fünfte Achse, wie es die geradlinige Zielanfahrt erfordert, mal zur ersten und mal zur vierten Achse synchron gesteuert.

In Fig. 2 ist die momentane Startposition Z 1 des Teleoperators gezeigt. In allen Figuren wurde auf die Darstellung der Vertikalbewegung (dritte Achse) verzichtet. In der Nullposition des Teleoperators wurde vom Werkzeugträger mittels automatischem Werkzeugwechselsystem (nicht dargestellt) eine Kamera 20 (Fig.1), z.B. eine Videokamera, aufgenommen und die Startposition Z 1 angefahren. Der Ring 1 steht in Nullstellung (Tabelle III), die mit R 1 bezeichnet ist.

Parallel zur Führung 5 verläuft die Bewegungslinie 5' (entspricht dem Weg des Schlittens 6) des Mast-Mittelpunktes 15' mit der translatorischen Nullstellung M 1 wobei der Mast um 178,5° zu seiner rotatorischen Nullstellung gedreht ist. Der Abstand M 1 / Z 1, allgemein M-Z, ist konstruktiv bedingt konstant.

Die Vertikalposition (dritte Achse) liegt 2000 mm unterhalb der Ringhöhe.

Die translatorischen Achsbewegungen werden durch Wegmesser und die rotatorischen Achsbewegungen durch Winkelmesser kontrolliert. Vom Startpunkt Z 1 wird durch Drehen und Schwenken der Werkzeugträger der Zielpunkt Z 3 ermittelt und schließlich unter dem Drehwinkel von 36,5° (fünfte Achse) und dem Schwenkwinkel von 49,7° (sechste Achse) anvisiert. Diese Richtung der optischen Kameraachse wird während der Zielanfahrt beibehalten, d.h. zu den folgenden Bewegungen der anderen Achsen synchron geschaltet.

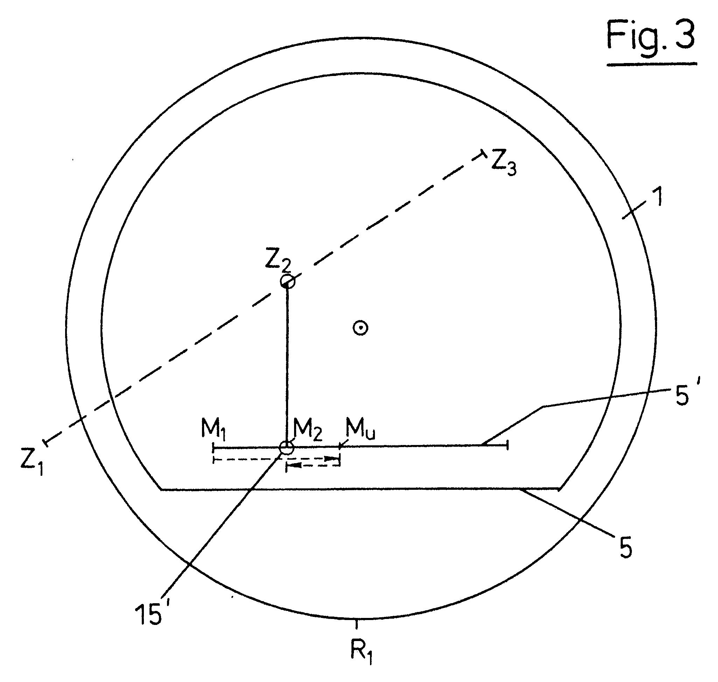

Auf dem Wege zum Raumziel (Fig.3) wird durch gleichzeitiges Rückwärtsdrehen des Mastes bis auf 90°, Verfahren des Vertikalsupportes 16 bis auf -5826 mm und horizontales Bewegen des Schlittens 6 von M 1 über den Umkehrpunkt M U zur Stellung M 2 = 825 mm der Zwischenpunkt Z 2 von der Kamera 20 erreicht.

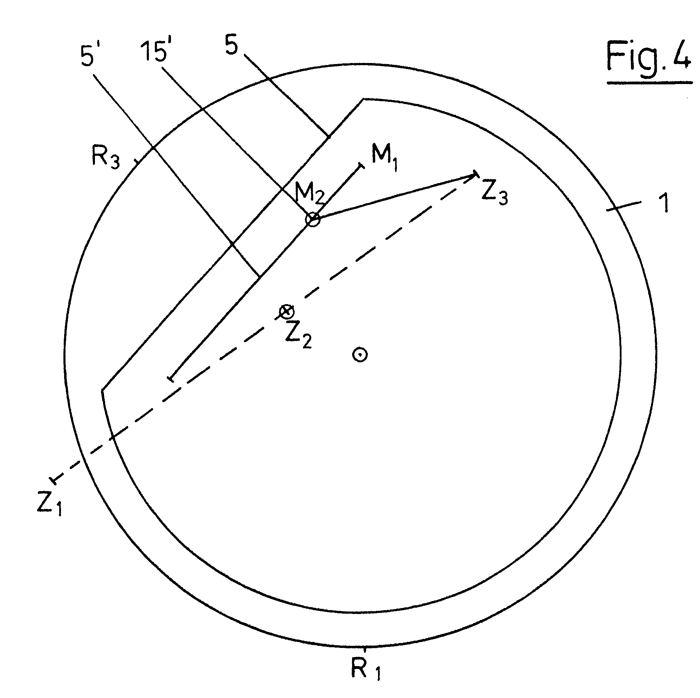

Hier wird die zweite Achse (Schlitten 6) stillgesetzt und der Ring 1 aus der Ruhelage R 1 gedreht bis am Zielpunkt Z 3 die Ringposition R 3 = 133° (Fig.4) erreicht ist.

Gleichzeitig wird der Vertikalsupport 16 auf -9000 mm und der Mast kontinuierlich vorwärts auf die Position 123° gedreht.

Das zunächst zur vierten, später auch zur ersten Achse synchron geschaltete Drehwerk 17 (Fig.1) des Werkzeugträgers 14 wird dabei von Z 1 = 36,5° über Z 2 = 125° bis Z 3 = 201° gedreht, während das Schwenkwerk 8 in der Position 49,7° verharrt.

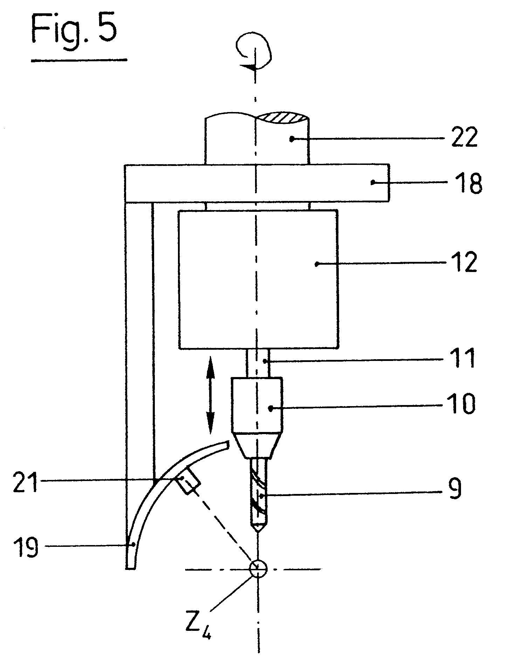

Fig. 5 zeigt eine erfindungsgemäße Ausführung einer Vorrichtung für einen Teleoperator mit der die Schwenkbewegung des Werkzeugträgers wie zuvor beschrieben ersetzt wird. Außerdem kann dadurch die Drehbewegung des Werkzeugträgers ersetzt oder ergänzt werden. Die Vorrichtung ist insbesondere einsetzbar, wenn zusätzlich zu einem Werkzeug dargestellt ist beispielhaft eine Bohrmaschine 12, ein Sichtgerät 21 (z.B. eine Kamera) das Arbeiten am Zielpunkt Z 4 beobachten soll.

Ein Zapfen 22 eines Werkzeugträgers 14 (Fig.1) trägt einen gekröpften Halter 18, an dem eine Bogenführung 19 für das Sichtgerät 21 befestigt ist.

EP 0 320 436 A2

Mit der am Zapfen 22 angebrachten Bohrmaschine 12 mit vertikalverschiebbarer Antriebswelle 11 und Bohrkopf 10 für die Aufnahme eines Bohrers 9 können am Zielpunkt Z 4 Löcher gebohrt werden.

Der Abstand des Bohrers 9 vom Zielpunkt Z 4 kann über ein nicht dargestelltes Meßgerät, das gleichzeitig bei Anfahrt zum Zielpunkt Z 4 als Kollisionswarngerät fungiert, gesteuert werden.

Für die Raumzielsuche kann die notwendige Drehbewegung des Sichtgerätes 21 durch den Zapfen 22 mit festgesetztem Halter 18 oder einem Drehantrieb in Halter 18 bei feststehendem Zapfen 22 erfolgen. Die Schwenkbewegung führt das Sichtgerät 21 entlang einer Bogenführung 19 mit einem nicht dargestellten Antrieb aus. Die Bogenführung 19 ist so gestaltet, daß die optische Achse des Sichtgerätes stets die Achse des Bohrers 9 in dessen Arbeitspunkt, hier ist es der Zielpunkt Z 4, schneidet. Das Ausrichten des Sichtgerätes 21 geschieht wie zuvor zur Fig. 2 beschrieben, nur wird die Schwenkbewegung nicht vom Werkzeugträger 14 bewirkt.

Falls erforderlich, kann durch ferngesteuertes Drehen des Halters 18 das Sichtgerät 21 den Zielpunkt Z 4 auch von der gegenüberliegenden Seite des Bohrers 9 anvisieren. Der Vorteil dieser Anordnung liegt darin, daß die Zielsuche, die optische Überwachung der Zielanfahrt und das Arbeiten am Zielpunkt Z 4 mit demselben Sichtgerät 21 beobachtet werden kann.


**Patentansprüche**

1. Verfahren zum Erkennen und Ansteuern eines Zieles in einem direkt nicht einsehbaren Raum, wobei eine drehbare Kamera an der Spitze eines Auslegers eines Teleoperators die Umgebung des Auslegers beobachtet und Bilder auf einen Monitor an einen Fernsteuerplatz sendet, dadurch gekennzeichnet, daß
- eine Kamera (20,21) an einem Werkzeugträger (14) eines mindestens vier Freiheitsgrade aufweisenden Industrieroboters positioniert wird und zunächst
- die um eine erste Achse um 360° drehbare und um eine zur ersten senkrechte, zweite Achse um 180° schwenkbare, mit einem Objektiv versehene Kamera (20,21) um die Vollkreisachse gedreht und um die zweite Achse geschwenkt wird, bis das Ziel ( Z 3, Z 4) in definierter Monitorlage zu sehen ist,
- dann wird die Kameralage bezüglich ihrer optischen Achse beibehalten,
- diese Kameraposition und die Richtung der optischen Achse durch Weg- und Winkelmessung ermittelt wird, worauf das Ziel (Z 3, Z 4) mit manueller Schaltung geradlinig angefahren wird, wobei
- der Robot in maximal drei Achsen gleichzeitig gesteuert wird und
- die restlichen Achsen zu den gesteuerten Achsen synchron geschaltet werden.

2. Verfahren nach Anspruch 1, dadurch gekennzeichnet, daß die Koordinaten und/oder Bewegungsrichtungen des Werkzeugträgers (14) am Fernsteuerplatz angezeigt werden.

3. Verfahren nach Anspruch 1 oder 2, dadurch gekennzeichnet, daß die Wege des Werkzeugträgers (14) und der Roboterachsen raumgetreu in einem Rechner gespeichert werden.

4. Verfahren nach den Ansprüchen 1 bis 3, dadurch gekennzeichnet, daß bei wiederholter Ansteuerung eines bekannten Raumziels (Z 3, Z 4) die bei der ersten Ansteuerung von der Kamera (20,21) aufgenommenen Bilder bewegungsgetreu zur Werkzeugträgerbewegung auf einem Monitor dargestellt werden.

5. Verfahren nach den Ansprüchen 1 bis 4, dadurch gekennzeichnet, daß die manuelle Schaltung auf den Start des Teleoperator-Antriebes beschränkt ist und die weitere Ansteuerung des Raumziels (Z 3, Z 4) vom Rechner gesteuert wird.

6. Verfahren nach den Ansprüchen 1 bis 5, dadurch gekennzeichnet, daß die Bewegungsrichtungen des Werkzeugträgers (14) zeitgleich und parallel zu den Bewegungsrichtungen eines Befehlsschalters am Fernsteuerplatz gekoppelt werden.

7. Verfahren nach den Ansprüchen 1 bis 6, dadurch gekennzeichnet, daß der Ansteuervorgang und das Raumziel (Z 3, Z 4) über einen Monitor mit Bildern von einer Kamera (20,21) mit ausrichtbarer optischer Achse, die an einen fixierten Standort installiert ist, vom Fernsteuerplatz aus kontrolliert wird.

8. Verfahren nach den Ansprüchen 1 bis 7, dadurch gekennzeichnet, daß mit einer zusätzlich zum Werkzeug (9) an dem Werkzeugträger (14) auf einer außerhalb der Werkzeugträgerachse angeordneten, über zwei Achsen bewegbaren Kamera (20,21) das Raumziel (Z 3, Z 4) angesteuert wird und ein Parallaxenfehler für die Steuerung des Werkzeuges (9) rechnerisch korrigiert wird.

9. Verfahren nach den Ansprüchen 1 bis 8, dadurch gekennzeichnet, daß die Kamera (20,21) so gedreht wird, daß die optische Achse der Kamera (20,21) und die Werkzeughauptachse sich im Raumziel (Z 3, Z 4) schneiden, wobei diese Ausrichtung der Kamera (20,21) sowohl für den Ansteuervorgang als auch für Arbeiten am Raumziel (Z 3, Z 4) konstant gehalten wird.

10. Verfahren nach den Ansprüchen 1 bis 9, dadurch gekennzeichnet, daß der über Monitor überwachte, vom Rechner geführte, Ansteuervorgang durch manuellen Eingriff korrigiert wird.

11. Verfahren nach den Ansprüchen 1 bis 10, dadurch gekennzeichnet, daß der Ansteuervorgang und/oder das Arbeiten am Raumziel (Z 3, Z 4) bei Unterschreiten eines Mindestabstandes zu einem Kollisionskörper unterbrochen wird.

12. Teleoperator zur Ausführung eines Verfahrens nach einem oder mehreren der vorhergehenden

7

Ansprüche, dadurch gekennzeichnet, daß der Ausleger des Teleoperators mit einem Kameraträger (18) versehen ist, der um die Werkzeughauptachse drehbar gelagert ist und eine Kameraführung (19) in Form eines Kreisbogens aufweist, dessen Kreismittelpunkt (Z 4) auf der Werkzeughauptachse liegt.

## Fig. 1

Fig. 2

EP 0 320 436 A2

EP 0 320 436 A2

Fig. 3

Fig.4

EP 0 320 436 A2

# Fig. 5